# EUROPEAN PATENT SPECIFICATION

(11) **EP 3 604 891 B1**
(45) Date of publication and mention of the grant of the patent: **12.10.2022**
(21) Application number: 18306044.1
(22) Date of filing: 01.08.2018
(51) Int. Cl.: F17C 5/00

(54) **DEVICE AND PROCESS FOR REFUELLING CONTAINERS WITH PRESSURIZED GAS**
VORRICHTUNG UND VERFAHREN ZUM BEFÜLLEN VON BEHÄLTERN MIT DRUCKGAS
DISPOSITIF ET PROCÉDÉ POUR RAVITAILLER DES RÉCIPIENTS AVEC DU GAZ SOUS PRESSION

(43) Date of publication of application: 05.02.2020
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: BUCK, Marcus, 65195 WIESBADEN (DE); WERLEN, Etienne, 75007 PARIS (FR)
(74) Representative: Air Liquide

(56) References cited:
- EP-A1- 2 491 318
- EP-A2- 2 812 640
- WO-A1-2009/135297
- WO-A1-2018/104982
- US-A1- 2012 011 866
- US-A1- 2012 198 868
- US-A1- 2018 119 967

## Description

The invention relates to a device and process for refuelling containers with pressurized gas.

The invention relates more particularly to a device for refuelling containers with pressurized gas, notably for refuelling gaseous hydrogen tanks, comprising a pressurized gas source, a transfer circuit comprising one upstream end connected to the gas source and at least one downstream end intended to be removably connected to a container, the device comprising a refrigeration system for cooling the gas flowing from the gas source prior to its entering into the container, the refrigeration system comprising a refrigerant cooling loop circuit comprising, arranged in series, a compressor, a condenser section, an expansion valve and an evaporator section, the refrigeration system comprising a cold source in heat exchange with the condenser section and a heat exchanger located in the transfer circuit and comprising a heat exchange section between the gas flowing in the transfer circuit and the evaporator section, the device comprising an electronic controller for controlling the refrigeration system, the device further including a temperature sensor for sensing the heat exchanger temperature, the electronic controller being configured to switch the refrigeration system in first standby mode when the device is not refuelling a container.

Hydrogen refuelling stations are designed for fast refuelling (few minutes) of Fuel Cell Electrical Vehicles (FCEV) with hydrogen at high pressure (for example equal or above 70 MPa). Hydrogen needs to be precooled (generally below -33°C) at dispenser refuelling nozzle in order to avoid overheating in the tank.

A known cooling or refrigeration system feeds a hydrogen cooling heat exchanger with a refrigerant of a refrigerant cooling loop circuit.

Refrigerant may be CO2. See for example documents JP20150921108A or US2016348840A. See also WO2018104982A1.

Generally, the heat exchanger includes a mass or block of material for storing cold for responding to high demand. The refrigeration device may provide nearly constant cooling and the cooling energy is stored in the thermal inertia of the heat exchanger (high thermal inertia).

However, the thermal inertia may be not sufficient in some situations to provide the cold needed. In addition, when using another type of heat exchanger (ex: a compact diffusion bonded heat exchanger) the thermal inertia is small. In that cases, the cooling energy has to be provided when there is a demand. This demand might change within seconds from zero to full cooling power.

Most efficient use of the cooling power is done using counter-current heat exchanger. In that case, it is desirable that the temperature of the refrigerant at the inlet to the heat exchanger remains in a pre-determined range of temperature.

For that purpose, pre-determined evaporation pressure range should be maintained at the inlet of the heat exchanger. Also, sufficient superheat should be maintained at the suction of the compressor. Superheat is for example the predetermined amount of heat added to the refrigerant after it has already vaporized. It can be defined by a temperature at a given pressure and may be measured at the outlet of the heat exchanger or at compressor inlet. The evaporation temperature of the refrigerant depends on pressure.

The reason why superheat is controlled is to make sure that the liquid refrigerant in the evaporator section has fully changed from a liquid to vapour (since it is wanted to have only vapour returning to the compressor suction/inlet).

The refuelling device (or station) may also be set in standby mode (waiting situation for refuelling) for an extended time. And even if there is a refuelling, the amount of gas might below the maximum design values. In those cases, the refrigeration system will operate at low load.

One goal is to overcome or reduce at least one of the preceding problems.

To this end, the device according the invention, according to the generic definition above, is essentially characterized in thatthe first standby mode the electronic controller is configured for switching off the compressor when the temperature of the heat exchanger is equal or below a predefined first standby temperature threshold and for starting and operating the compressor for producing cooling power and cooling the heat exchanger when the sensed temperature of the heat exchanger is above a second standby threshold temperature.

In addition, (or alternatively), embodiments might include one or several of the below features:
- first standby temperature threshold is between -40°C and - 20°C,
- second standby temperature threshold is above the first standby temperature, for example one to thirty degrees above the first standby temperature threshold,
- the compressor is a variable speed compressor, the electronic controller being configured for operating the compressor at its lowest speed above zero during the first standby mode when producing cooling power for cooling the heat exchanger,
- the electronic controller is configured for operating the compressor during a minimum preset operating time when started during the first standby mode for producing cooling power for cooling the heat exchanger,
- the device comprises a temperature sensor for measuring or calculating the heat exchanger temperature,
- in the first standby mode the electronic controller is configured for controlling the refrigeration system to maintain the refrigerant temperature at the heat exchanger inlet at predefined temperature,
- the device comprises and expansion vessel comprising an inlet connected to the refrigerant cooling loop circuit, downstream the compressor outlet, and an outlet connected to the refrigerant cooling loop circuit, upstream the compressor inlet, the device comprising a set of valve(s) configured for controlling the flow of refrigerant to the expansion vessel and from the expansion vessel, for regulating the pressure in the refrigerant cooling loop circuit and/or in the expansion vessel,
- the electronic controller is configured in the first standby mode for starting or activating the cold source when the sensed pressure in the refrigerant cooling loop circuit is above a preset standby pressure threshold so that cold is transferred by the cold source to the refrigerant cooling loop circuit and thus the pressure in the refrigerant cooling loop circuit is lowered,
- the electronic controller is configured for switching the refrigeration system in a second refuelling mode upon receiving a signal indicative of a refuelling start or demand for a container,
- in the second refuelling mode the electronic controller is configured for controlling the refrigerant temperature difference between inlet and outlet of heat exchanger and notably for increasing the opening of the expansion valve when said temperature difference increases and for decreasing the opening of the expansion valve when said temperature difference decreases,
- the refrigerant cooling loop circuit comprises a bypass conduit comprising an upstream end connected to the outlet of the compressor and a downstream end connected to the refrigerant cooling loop circuit upstream the compressor inlet and bypassing the condenser section and expansion valve, the device comprising a bypass regulating valve for controlling the flow of refrigerant flowing into the by-pass conduit,
- the device comprises a pressure sensor for sensing the refrigerant pressure in the cooling loop circuit between the compressor inlet and the heat exchanger outlet, notably at the inlet of the compressor, the electronic controller being configured in the first standby mode for starting cold source and/or operating the compressor when the measured pressure in the refrigerant cooling loop circuit is above a preset standby pressure threshold and thus lowering the pressure in the refrigerant cooling loop circuit,
- the electronic controller is configured for regulating the suction pressure at the inlet of the compressor on a predetermined pressure set point via the control of the compressor speed and the opening of the bypass valve,
- the device or process comprises a temperature sensor for sensing the refrigerant temperature in the refrigerant cooling loop circuit between the compressor inlet and the heat exchanger outlet and, notably at the inlet of the compressor,
- the electronic controller is configured for regulating the temperature of the refrigerant at the inlet of the compressor on a predetermined temperature set point via a control of the compressor speed and the opening of the bypass valve,
- the electronic controller is connected to the expansion valve and configured for controlling cooling power produced by the refrigeration system via the control of the opening of the expansion valve,
- the device or process comprises a differential temperature sensor system measuring the difference between the temperature of the refrigerant in the refrigerant cooling loop circuit at the outlet of the heat exchanger and the temperature of the refrigerant in the cooling loop circuit at the inlet of the heat exchanger, the electronic controller being configured for controlling the cooling power produced as a function of this temperature differential,
- the electronic controller is configured to generate or receive a signal indicative of the cooling power needed at heat exchanger for cooling the flow of gas in the transfer circuit through the heat exchanger and, in response, for controlling the cooling power produced by the refrigeration accordingly,
- the signal indicative of the cooling power needed at the heat exchanger comprises at least one among: the quantity or the flowrate of gas flowing through the transfer circuit, the temperature of the gas flowing through the transfer circuit, the pressure of the gas flowing through the transfer circuit, a pressure value or pressure change in the gas source, an external demand such as a wireless signal,
- the process comprising the step of controlling the quantity refrigerant compressed by the compressor (8) which is reinjected via a bypass conduit upstream the compressor, without flowing via the condenser section (9) and the expansion valve,
- the compressed gas reinjected via a bypass conduit upstream the compressor (8) is reinjected at the outlet of the heat exchanger,
- in the first standby mode, the process comprises a step of lowering the pressure in the refrigerant cooling loop upstream of the compressor via the starting of the compressor when the pressure in the refrigerant cooling loop circuit is above a preset

The invention also deals with a process for refuelling containers with pressurized gas, notably for refuelling gaseous hydrogen tanks, with a device comprising gas source, a transfer circuit for transferring compressed gas from the gas source to a container, the process comprising a step of cooling a heat exchanger located in the transfer circuit, the heat exchanger being in heat exchange with the gas flowing from the source to the container(s), the step of cooling comprising the production of a cooling power in a evaporator section of a refrigerant cooling loop circuit, the refrigerant cooling loop circuit comprising, arranged in series, a compressor, a condenser section, an expansion valve and the evaporator section, the condenser section being in heat exchange with a cold source, the process comprising the step of switching the refrigeration system in a first standby mode when the device is not refuelling a container, characterized in that, in said first standby mode the compressor is switched off when the temperature of the heat exchanger is equal or below a predefined first standby temperature threshold and is started and operated for producing cooling power and cooling the heat exchanger when the temperature of the heat exchanger is above a second standby threshold temperature.

According to other embodiments, the invention can include one or several of the below features:
- the process comprises a step of directing some refrigerant of the refrigerant cooling loop circuit to an expansion vessel for lowering the pressure in the refrigerant cooling loop circuit below a predetermined value,
- when the pressure in the expansion vessel is above a predetermined value, the process comprises a step providing cold to the refrigerant cooling loop circuit via the cold source and withdrawing gas from the expansion vessel to the refrigerant cooling loop circuit,
- the cold source and the compressor are both started when the heat exchanger must be cooled,
   - - the process comprises a step of regulating the suction pressure at the inlet of the compressor to a predetermined pressure level via the control of the compressor speed and the quantity of refrigerant reinjected via a bypass conduit upstream the compressor,
- the process comprises a step regulating the temperature of the refrigerant at the inlet of the compressor on a predetermined temperature set point via the control of the compressor speed and the degree of opening of the bypass valve,
- the process comprises a step of controlling the cooling power produced in the evaporator section of the refrigerant cooling loop circuit via the control of the opening of the expansion valve,
- the process comprises a step of controlling the cooling power produced in the evaporator section of the refrigerant cooling loop circuit as a function of the temperature differential between the temperature of the refrigerant in the refrigerant cooling loop circuit at the outlet of the heat exchanger and the temperature of the refrigerant in the cooling loop circuit at the inlet of the heat exchanger,
- the process comprises a step of controlling the cooling power produced at the evaporator section of the refrigerant cooling loop circuit as a function of a signal indicative of the cooling power demand at the heat exchanger, said signal including at least one among: the quantity or flowrate of gas flowing through the transfer circuit, the temperature of the gas flowing through the transfer circuit, the pressure of the gas flowing through the transfer circuit, a pressure or pressure change in the gas source, a demand from a user for refuelling a container, a wireless signal,
- the process comprises a step of switching the device in a first standby mode when there is not demand for refuelling a container, in the first standby mode the compressor being switched on when the temperature of the heat exchanger is equal or below a predefined first standby temperature threshold, for example comprised between -40°C and -20°C, and wherein the compressor is started for producing cooling power for cooling the heat exchanger when the temperature of the heat exchanger is above a second standby threshold, for example equal or above the first standby temperature threshold,
- The invention mays also relate to any alternative device or process comprising any combination of the above or below features within the scope of the claims.

Other particularities or advantages will be apparent from the reading of the below description, referring to the drawings wherein:
- figure 1 is schematic and partial view showing the structure and operation of a refuelling device according to a first embodiment,
- figure 2 is schematic and partial view showing the structure and operation of a refuelling device according to a second embodiment,
- figure 3 is schematic and partial view showing the structure and operation of a refuelling device according to a third embodiment,
- figure 4 is schematic and partial view showing the structure and operation of a refuelling device according to a fourth embodiment,
- figures 5 et 8 are schematic and partial views of different possible operations of the device and process that might be implemented (independently or combined),
- figure 9 is schematic and partial view showing the structure and operation of a refuelling device according to a further embodiment.As illustrated in the drawings, the device 1 for refuelling containers 3 might be a fuelling station for refuelling a pressurized gas to vehicle tanks (for example hydrogen but it may apply to other gases: natural gas...).

The device 1 comprises a pressurized gas source 2, a transfer circuit 4 comprising one upstream end 5 connected to the gas source 2 and at least one downstream end 6 (for example provided with a nozzle) intended to be removably connected to a container or tank 3 to be filled.

The gas source 2 may include for example at least one among: pressurized gas storage(s) or buffer(s), compressor(s), bundle(s) of pressurized gas cylinders or tube trailers(s), a liquefied gas source and a vaporiser, an electrolyser, a gas network outlet.

The transfer circuit 4 may comprise a set a valves controlled by an electronic controller according to a predefined refuelling strategy (pressure increase or rate of pressure increase and/or mass injected control and/or control of the density in the tank 3 and/or control of the temperature increase in the tank 3).

The device 1 comprises a refrigeration system for cooling the gas flowing from the gas source 2 prior to its entering into the container 3 (for example to a predefined temperature below 0°C notably between -33°C and -40°C). The cooled gas temperature may also be controlled to vary according to refuelling condition(s) (as a function of temperature and/or pressure in the tank 3, rate of pressure increase in the tank 3, flowrate of gas in the transfer circuit 4, the ambient temperature...).

The refrigeration system comprises a refrigerant cooling loop circuit 20 comprising, arranged in series, a compressor 8, a condenser section 9, an expansion valve 10 and an evaporator section 11. The refrigerant flowing in the cooling loop circuit 20 is preferably carbon dioxide but another refrigerant might be used such as R717 (ammonia), R22, R134a, R404a, R507 or any refrigerant capable of reaching a temperature of at least -40°C.

The condenser section 9 may include heat exchanger for cooling the refrigerant compressed by the compressor 8.

The refrigeration system comprises a cold source 12 in heat exchange with the condenser section 9. This cold source 12 may include a cooling fluid circuit such as a loop. For example, air, water, nitrogen or any appropriate cooling fluid or refrigerant. The cold source 12 may include any other cold organ or device able to cool the refrigerant such as thermoconvectors, cooling tower or secondary refrigerating cycle. The cooling fluid from the cold source 12 may be in heat exchange with the condenser section 9 in a heat exchanger.

The refrigeration system comprises preferably a heat exchanger 7 located in the transfer circuit 4 and comprising a heat exchange section between the gas flowing in the transfer circuit 4 and the evaporator section 11. The evaporator section 11 may comprise a circuit (for example coils) in heat exchange with the transfer circuit 4 and/or with a mass of material (aluminium or the like) forming an organ having a high thermal inertia for storing cold (for example a several centimetres thick metal or aluminium block and/or other material such a Phase Change Material).

Preferably, the refrigerant cooling loop circuit 20 comprises a bypass conduit 13 comprising an upstream end connected to the outlet of the compressor 8 and a downstream end connected upstream the compressor 8 in the refrigerant cooling loop circuit 20 and bypassing the condenser section 9 and expansion valve 10. The refrigeration device preferably comprises a bypass regulating valve 15 for controlling the flow of refrigerant flowing into the by-pass conduit 13.

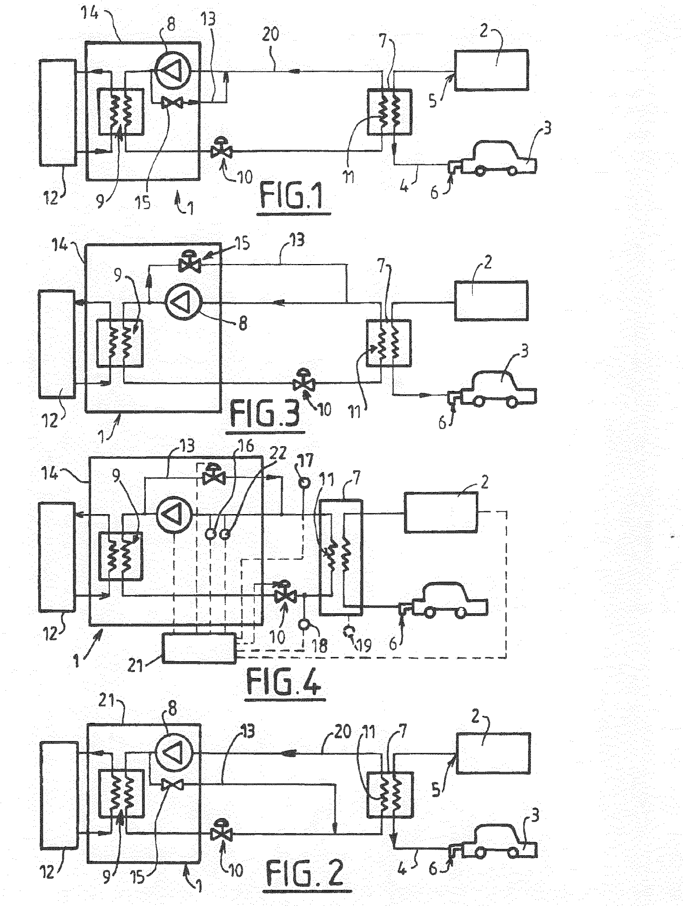

As illustrated in figure 1 at least part of: the compressor 8, the condenser section 9, the cold source 12, the bypass regulating valve, and possibly the expansion valve 10 might be located in a frigorific module 14.

As illustrated in figure 1, the downstream end of the bypass conduit 13 (the upstream may be connected to the compressor outlet) may be connected directly to the suction line of the compressor 8. This means that the hot compressed bypassed refrigerant is reinjected directly into the inlet of the compressor 8.

In another embodiment (figure 2) the downstream end of the bypass conduit 13 may be connected upstream the inlet of the heat exchanger 7. This second solution allows the mixing of the hot compressed bypassed refrigerant and the colder refrigerant flow regulated by the expansion valve 10 before entering into the heat exchanger 7. This permits the expansion valve 10 to maintain superheat level (a sufficient temperature) in the circuit. This allows also a higher fluid velocity in the heat exchanger 7 and suction line of the compressor.

In case the compressor is an oil lubricated piston compressor, this allows to better carry along oil that would have leaked and accumulated in the refrigerant circuit and especially in the heat exchanger 7. However, at low evaporator load keeping the temperature at the heat exchanger inlet constant might be more difficult to control.

In a preferred embodiment illustrated in figures 3 and 4, the downstream end of the bypass conduit 13 is connected to the outlet of the heat exchanger 7 of the transfer circuit 4. This is to say the hot compressed bypassed refrigerant is reinjected and mixed with the refrigerant exiting the said heat exchanger 7.

This means that the hot compressed bypassed refrigerant is not injected in the compressor 8 inlet or suction line but more upstream and preferably closer to the refrigerant outlet of the heat exchanger 7.

For example, the downstream end of the bypass conduit 13 is tied up (connected) in the refrigerant cooling loop circuit 20 just after the evaporator 11 section, for example between twenty cm and thirty cm after the outlet of this evaporator 11 section or after the outlet of the heat exchanger 7. And preferably this connection of the hot gas bypass conduit 13 is not too close to a refrigerant temperature measurement 17 at the outlet of the evaporator 11.

This permits to avoid or limit influence of the bypass fluid on temperature measured 17). Thus preferably, a temperature measurement 17 is as close as possible to the outlet of the evaporator 11 (for example around 5-10cm from the outlet due to the required fittings) and the tie in of the bypass conduit 13 is around 20-40cm downstream or the outlet or 20 to 30 cm downstream the temperature sensor 17 (for example 20 to 30 cm downstream a first bend of the refrigerant circuit/conduit). However, the evaporator 11 is generally mounted inside a dispenser and the pipes come from below, the location is nearly automatically defined due to the available space.

Compared to the solution described on figure 2, this solution prevents or lowers the problems of a fluctuating temperature at the inlet of the heat exchanger 7 as there is not mixing of hot and cold refrigerant at the inlet of the heat exchanger 7. Compared to the solution described on figure 1, this solution helps oil return and prevents liquid refrigerant accumulation in the return line of the refrigerant cooling loop circuit 20 (i.e. in the line from heat exchanger to the compressor inlet.

Preferably, the bypass valve 15 is a controlled valve able to be set in a closed position or a plurality of open positions or able to be set in opened and closed positions (for example full open and full closed) for modulated periods of time (e.g. Pulse Width Modulation on solenoid valves for example). This allows interrupting or for varying the flowrate of refrigerant flowing in the bypass conduit 13. The device 1 may comprise an electronic controller 21 connected to the bypass valve 15 and configured (for example programmed) for controlling the opening of said the bypass valve 15 (see figure 4).

The electronic controller 21 may comprise organ(s) for storing treating receiving and/or sending data. For example, it comprises microprocessor(s) and/or calculator(s) and/or computer. The electronic controller 21 might be located in the device or station or might distant. This electronic controller 21 may also control the flow of gas in the transfer circuit 4 to the tank 3.

The compressor 8 is preferably a variable speed compressor. The electronic controller 21 might be connected to the compressor 8 and configured for controlling the compressor 8 (on/off state) and the compressor 8 speed.

The cooling power of the refrigeration system may be primarily controlled by the opening of expansion valve 10. The controller 21 is preferably connected to the expansion valve 10 and configured for controlling cooling power produced by the refrigeration system via the control of the opening of the expansion valve 10.

In order to maintain a constant evaporation pressure, the suction pressure upstream the compressor 8, especially at the inlet of heat exchanger 7, has to remain in a predetermined range.

The control of the evaporation pressure might thus be made via the control of the bypass valve 15 and the compressor 8 speed.

The evaporation temperature, i.e. the temperature of the refrigerant after the expansion valve is depending on the pressure downstream of the expansion valve 10.

Based on the desired evaporation temperature (for a predetermined cooling of the refuelling gas) the required suction pressure can be calculated (by mean of appropriate equation of sate or correlation).

The pressure can be measured at the exchanger 7 or preferably at the suction side of the compressor 8. As illustrated in figure 4, the device may comprise a pressure sensor 16 for sensing the refrigerant pressure in the cooling loop circuit 20 between the compressor 8 inlet and the heat exchanger 7 outlet, notably at the inlet of the compressor 8.

To compensate for pressure losses, a measurement 18 of the temperature at the inlet of the heat exchanger 7 may be used to decrease the setpoint of the suction pressure control.

As illustrated in figure 4, the device may comprise a temperature sensor 18 for sensing the refrigerant temperature in the evaporation section 11 upstream the heat exchanger 7, notably at the inlet of the heat exchanger 7.

The suction pressure of the compressor 8 may be controlled with the control of the flow of hot gas admitted in the bypass conduit 13 and with the speed of the compressor 8.

Zero refrigerant flow through the heat exchanger 7 may be achieved if the compressor 8 is at minimum speed (or stopped) and the bypass regulating valve 15 is fully open.

The maximum flow of refrigerant through the heat exchanger 7 is obtained when bypass regulating valve 15 is closed and the compressor 8 is at its maximum speed.

This relation might be controlled with a split range control technology.

This permits to make sure that there is always sufficient superheat at the suction side of the compressor 8.

Fast load changes may result in fast reactions of the expansion valve 10. This has an effect on the suction pressure of the compressor 8. For a fast reaction of the pressure control, the opening of the expansion valve 10 can be as associated with a feed forward signal to the pressure control output (i.e. by-pass regulating valve 15 and compressor 8 speed set-points).

If the cooling demand increases, the opening of expansion valve 10 is increased. To keep the evaporation pressure constant, the signal to the expansion valve 10 may also be used to calculate a feed forward signal to the suction pressure control. This means that the increase of the opening of the expansion valve might command the decrease of the by-passed refrigerant flow and/or the increase of compressor 8 speed.

In typical refrigeration applications, the superheat (refrigerant temperature) can be measured just after the evaporator section 11 (at the outlet of the heat exchanger 7).

Alternatively, or in addition, it is possible to measure the superheat closer to the compressor 8 inlet, for example at the inlet of the frigorific module 14 (the frigorific module may be named also chiller).

The main reason to measure temperature close to the evaporator section 11 (heat exchanger 7) is energy consumption. In the device, the distance between the chiller and the dispenser 6 can be used to subcool the liquid refrigerant and increase the temperature of the gaseous refrigerant at the suction side of the compressor 8. For example, referring to figure 4, this can be achieved by running the line between outlet of condensing section 9 and expansion valve 10, along with the line evaporative section 11 and superheat control 22, within the same heat insulation material or structure. For this reason, the superheat control is preferably controlled closer to the compressor 8 than to the heat exchanger 7.

Thus, the device 1 preferably comprise a temperature sensor 17 for sensing the refrigerant temperature in the refrigerant cooling loop circuit 20 between the compressor 8 inlet and the heat exchanger 7 outlet and, notably a sensor 22 at the inlet of the compressor 8.

The electronic controller 21 can configured for regulating the temperature of the refrigerant at the inlet of the compressor 8 in a predetermined temperature range via a control of the compressor 8 speed and the opening of the bypass valve 15.

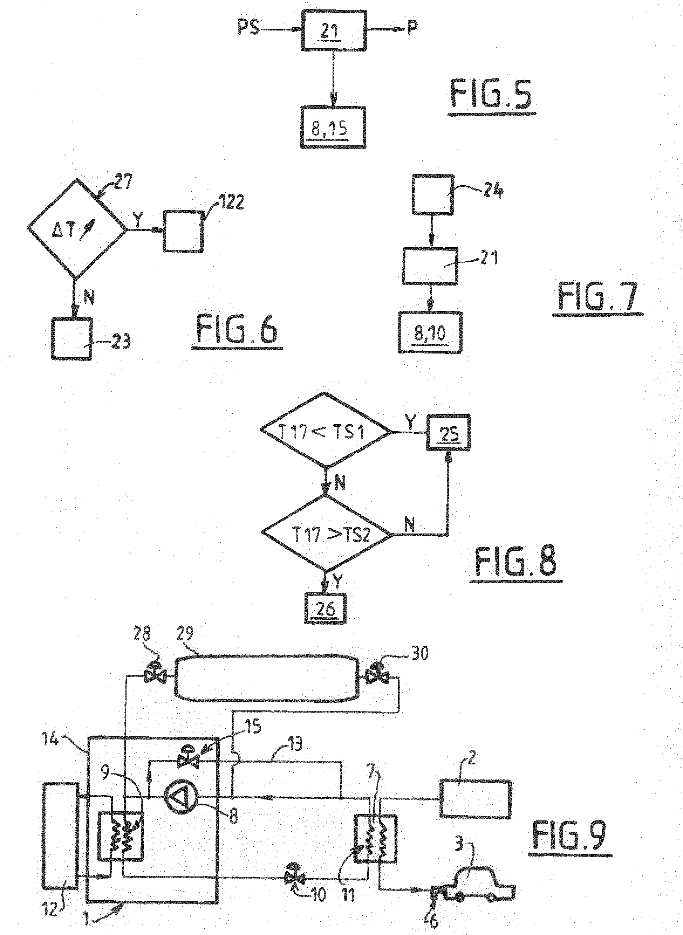

As illustrated in figure 5, based on the actual (measured or calculated pressure P and the Pressure set-point PS (pressure needed), the electronic controller acts on the bypass valve 15 and compressor 8.

The control of the cooling power may be based on temperature measure (a superheat control) at the outlet of the heat exchanger 7. This control scheme works well when there are only slow changes in cooling demand. However, in case of tanks refuelling station, fast load changes might happen. The simple temperature control strategy would fail to keep the gas temperature (example H2) to be cooled at the right temperature range for refuelling (typically between -33°C and -40°C).

In a typical refrigeration application, the cooling demand changes are quite slow. In those cases, the reaction speed of the chiller is thus not important.

For refuelling stations, the cooling demand may change within seconds from zero to full cooling power. For this reason, a single temperature based control might not be sufficient.

Preferably, the device comprises a differential temperature sensor system measuring the difference between the temperature of the refrigerant in the refrigerant cooling loop circuit 20 at the outlet of the heat exchanger 7 and the temperature of the refrigerant in the cooling loop circuit 20 at the inlet of the heat exchanger 7. The electronic controller 21 may be configured for controlling the cooling power produced as a function of this temperature differential.

For example, the temperature differential is calculated based on temperature sensors 17, 18 at outlet and inlet of the heat exchanger 7.

The temperature at the inlet 18 is equal to the evaporation temperature given by the suction pressure. Instead a measuring, a calculated inlet temperature via the suction pressure reacts faster and gives better control.

In this context the terms « temperature sensor » means a device for directly or indirectly measuring a temperature and/or a device for calculating the temperature based on one or several parameters.

The expansion valve 10 might be control via a closed loop control on refrigerant temperature difference between inlet 18 and outlet 17 of the heat exchanger 8. When there is no or low cooling power required, (heat exchanger cold in standby mode for example), temperature difference is very low. As the cooling demand increases, the temperature difference increases and the control will cause the expansion valve 10 to open as required.

As the actual cooling power is directly linked to the opening of the expansion valve 10 (typically with proportional and/or modulated opening times), a measurement to control if the supplied cooling power is too high or too low may thus be the temperature difference between refrigerant inlet and refrigerant outlet to heat exchanger 7.

The device 1 may be switched in a refuelling mode when there is a refuelling demand.

For example, the refuelling mode might be activated upon generating or receiving in the electronic controller 21 a signal or command. For example, a payment/demand from a user and/or when the refuelling nozzle 6 is removed from a base dispenser.

After the nozzle 6 is removed it may take some time (for example 10s to 20s) for the user to attach the nozzle 6 to the car and to activate the refuelling sequence.

When the connection of the nozzle to the tank 3 is made, then a pressure pulse test may be done (about 30s for example) and the actual refuelling can then start.

Within a short period after the refuelling starts (for example 30seconds) a predetermined low gas temperature should be reached at the dispenser outlet 6 (for example about -33°C).

The device can be designed so that within a time period (example 60s) after the nozzle is removed from its base the heat exchanger 7 is cooled at predetermined temperature (-38°C for example).

This means that the heat exchanger is subcooled prior to the gas flow in the transfer circuit 4 to the tank 3.

If the system is in stand-by mode (as described below) when cooling of heat exchanger 11 prior to the gas flow is requested, electronic controller 21 may start compressor 8 and control expansion valve 10 and by-pass regulating valve 15 as described above. This will cause a fast cooling.

The refuelling of a tank 3 can take between 150s and 500s for example. During that time, the actual cooling demand may change rapidly. These rapid changes are typically too fast for a classical control. To maintain a stable temperature of the hydrogen a feed forward control is preferably implemented.

For example, the operating parameters of the refrigeration system will be based on the actual required cooling energy.

Thus, once the actual refuelling starts, the refuelling will create a cooling demand. Based on the actual cooling demand the required cooling power may be calculated/provided.

The electronic controller 21 may calculate and control the required refrigerant flow in the heat exchanger 7 (as the cooling demand increases the refrigerant flow has to increase accordingly).

The compressor 8 may start shortly after the refuelling start. To limit the power consumption, the refrigeration system may cool the internal heat exchanger 9 (condenser section) and the heat exchanger 7 as much as possible at the beginning.

As the cooling demand increases first the bypass valve 15 might be closed and then the compressor 8 speed might be increased as required. This can be done via a split range control.

To react faster on load changes, the required cooling power may be calculated based on the gas flow to be cooled. The calculated cooling demand may act as on offset to the electronic controller 21. The expansion valve 10 may thus be opened before a significant change in differential temperature occurs at the heat exchanger 7.

A feed forward control based on the actual cooling demand may be used. Based on the gas flow in the transfer circuit 4 and the (expected) inlet temperature, the required cooling power may be calculated. Based on the required cooling power, the required refrigerant flow can be calculated and then the required opening of the expansion valve 10. The required expansion valve 10 opening may thus be used to generate a feed forward signal for the cooling power control.

An estimate of the required cooling power may be calculated using the instrumentation available on the device 1. For example, the cooling power required might set equal to the gas flowrate to be cooled multiplied by the difference between the enthalpy of the gas at the inlet of the heat exchanger 7 and the enthalpy of said gas at the outlet of the heat exchanger 7. This can be calculated with the expected outlet gas temperature at the nozzle 6 (typically -40°C). As a minimum, gas flow estimate may be needed. This can preferably be taken from a flow meter signal in the transfer circuit for example. But this can be also calculated from the signal of other instruments (e.g. a pressure drop or pressure change in the source 2 such as buffer(s)). To improve the accuracy of cooling power calculation, other measured values may be taken into account such as gas pressure upstream the heat exchanger 7, gas pressure downstream the heat exchanger 7, gas temperature upstream the heat exchanger, ambient temperature, temperature of the heat exchanger...

As illustrated in figure 7 a cooling power demand signal 24 will cause electronic controller 21 to acts on compressor 8 and bypass valve 10 to fit with the demand.

The device might also be put in a standby mode (for example between two fillings).

During this standby mode the heat exchanger 7 might be kept at a temperature that allows a quick start of a refuelling (with a predefined time period, for example within 60s).

This requirement may define the maximum temperature of the heat exchanger 7 during standby mode. For example, if the refrigeration system is capable to cool the heat exchanger 7 by 20°K within 60s, then the active cooling during standby mode shall start when the heat exchanger 7 temperature is above a predefined threshold, for example above -18°C.

If the system is at a low temperature (for example heat exchanger temperature below a first standby temperature threshold, for example below -20°C) the system is put/kept in standby mode. The compressor is then preferably switched off.

During standby mode, the liquid refrigerant warms up and the pressure in the refrigerant cooling loop circuit 20 will increases.

To reduce the pressure in the refrigerant cooling loop circuit 20 (pressure increases beyond a preset limit), the cold source 12 might be started to produce or provide cold to the refrigerant circuit 20.

In case the temperature of the heat exchanger 7 must be lowered (or maintained cold), the compressor 8 might be also started.

The start of compressor 8 will cause flow in the loop and a reduction of the pressure at its inlet.

When the device 1 is in the standby mode, the refrigerant (typically liquid CO2) downstream of condenser heat exchanger 9 warms up and may evaporate leading to a pressure increase on the discharge side of the compressor 8. One solution is to start the cold source 12 for providing cold to the refrigerant and thus lowering the refrigerant pressure. To reduce the number of starts of the cold source 12, as illustrated at figure 9, the device may comprise an expansion vessel 29 comprising an inlet connected to the refrigerant cooling loop circuit 20 at the outlet of the compressor 8 side. The expansion vessel 29 comprises an outlet connected to the refrigerant cooling loop circuit 20 at the outlet of the compressor 8 side. The device comprises a set of valves 28, 30 for controlling the flow of refrigerant from the refrigerant circuit 20 (downstream the compressor outlet) to the expansion vessel 29 and from the expansion vessel 29 to the refrigerant circuit 20 (upstream the compressor 8 inlet). The electronic controller 21 may be configured to open the inlet valve 28 to the expansion vessel 29 until the pressure downstream the compressor 8 is below a certain value (typically open at 35barg) and close at preset value (for example33barg).

When the temperature of heat exchange 7 is too high or when the pressure in the expansion vessel 29 is too high (for example above 15barg) the cold source 12 might be started and the compressor 8 might be started. Outlet valve 30 of expansion vessel 29 might be opened and the pressure in the expansion vessel 29 is thus reduced to appropriate value again (10barg for example).

If during standby mode the heat exchanger 7 warms up too much, it is preferably cooled again.

At this operating scenario the time to reach the low temperature is not important. Thus the compressor 8 can be operated at the speed with the highest efficiency (typically its lowest speed).

At minimum speed of the compressor 8, the cooling power is for example 10 to 20kW. This is enough cooling power to cool a typical heat exchanger by 30°K within 120sec. The minimum operating time of the compressor 8 might be fixed (for example 120s). Thus there might be no need for a higher compressor speed during this standby cooling of the heat exchanger 7.

For example, if the heat exchanger 7 temperature T17 (sensor 19 at figure 8) falls below first standby temperature threshold ("TS1" at figure 8 and for example equal to -37°C), the refrigeration system (the cooling) or compressor 8 can switched off (on maintained switched off, see ref. 25 at figure 8). The heat exchanger 7 temperature can be for example be measured via temperature sensor 19 or calculated based on other parameter(s).

However, if this temperature T17 is above a second standby temperature threshold TS2 (for example above -20°C or the like) the refrigeration system is (or can) be switched on (see "Y" and ref. 26 at figure 8). Otherwise the refrigeration system (the cooling) or compressor can be switched off (on maintained switched off, see ref. 25 at figure 8.

The electronic controller 21 may control the refrigeration system so that the set point of the refrigerant temperature at the heat exchanger inlet is a predefined temperature, for example -40°C.

Thus the electronic controller 21 may regulate the evaporation temperature, for example measured at the inlet of the heat exchanger 7. If this temperature increases too much a pressure setpoint at compressor 8 inlet may be decreased (i.e. the temperature to be achieved at the heat exchanger inlet).

The expected pressure losses via the heat exchanger 7 and the compressor suction line might be less than 1bar. Thus, the effect on the evaporation temperature due to pressure losses can be said less than 2°K in case refrigerant is CO2. If a different refrigerant is used the temperature effect might be much bigger.

The electronic controller 21 may control the temperature difference between inlet 18 and outlet 17 of heat exchanger 7. If the heat exchanger warms up (given by temperature differential ΔT increase) see reference 27 and arrow "Y" at figure 6, the controller 21 can open the expansion valve 10 (see reference 122 at figure 6).

As the heat exchanger 7 cools down, the temperature differential decreases (see arrow "N" at figure 6) and the electronic controller 21 will close expansion valve 10 (see reference 23 at figure 6).

Thus, the amount of refrigerant flowing in the heat exchanger 7 can be controlled based on this temperature differential (between inlet and outlet). If the differential temperature increases the output of the controller 21 increases and more refrigerant is sent to the heat exchanger (and vice versa). This can be controlled as feed forward control signal on the valve 10.

The minimum output might be adjusted in such a way that at zero load the superheat temperature at the inlet of the compressor 8 is around a predefined temperature (for example +10°K).

In case of a "standby cooling" the set point can be higher, for example +20°K.

The electronic controller 21 can control the compressor 8 speed and the bypass valve 15 to maintain a constant pressure at the inlet of the compressor 8.

The superheat control (temperature control) is preferably always in operation. In case the superheat temperature drops too low the expansion valve 10 can be closed as required.

Preferably, if the superheat temperature at the inlet of the compressor is too low the expansion valve 10 is closed independant of the actual cooling demand.

In case the superheat temperature increase too much the expansion valve 10 can be opened as required.

If the superheat temperature at the inlet of the compressor is too low the hot gas bypass valve 15 can be opened.

To avoid complete closing of the expansion valve 10 valve, a minimal opening of the expansion valve 1 0can be set. This minimum opening can be set such that the suction temperature at the compressor 8 inlet is always sufficiently superheated due to the hot bypassed gas injection.

In addition to the advantages above, the device may allow a very fast change in cooling power while maintaining a constant evaporation pressure and sufficient superheat at the suction of the compressor 8.

## Claims

1. A device for refuelling containers with pressurized gas, notably for refuelling gaseous hydrogen tanks, comprising a pressurized gas source (2), a transfer circuit (4) comprising one upstream end (5) connected to the gas source (2) and at least one downstream end (6) intended to be removably connected to a container (3), the device (1) comprising a refrigeration system for cooling the gas flowing from the gas source (2) prior to its entering into the container (3), the refrigeration system comprising a refrigerant cooling loop circuit (20) comprising, arranged in series, a compressor (8), a condenser section (9), an expansion valve (10) and an evaporator section (11), the refrigeration system comprising a cold source (12) in heat exchange with the condenser section (9) and a heat exchanger (7) located in the transfer circuit (4) and comprising a heat exchange section between the gas flowing in the transfer circuit (4) and the evaporator section (11), the device comprising an electronic controller (21) for controlling the refrigeration system, the device further including a temperature sensor (19) for sensing the heat exchanger temperature (7), the electronic controller (21) being configured to switch the refrigeration system in first standby mode when the device is not refuelling a container, **characterized in that** in the first standby mode the electronic controller (21) is configured for switching off the compressor (8) when the temperature of the heat exchanger (7) is equal or below a predefined first standby temperature threshold and for starting and operating the compressor (8) for producing cooling power and cooling the heat exchanger (7) when the sensed temperature of the heat exchanger (7) is above a second standby threshold temperature, and. **in that** the electronic controller (21) is configured in the first standby mode for starting or activating the cold source (12) when the sensed pressure in the refrigerant cooling loop circuit (20) is above a preset standby pressure threshold so that cold is transferred by the cold source (12) to the refrigerant cooling loop circuit (20) and thus the pressure in the refrigerant cooling loop circuit (20) is lowered.

2. Device according to claim 1, **characterized in that** first standby temperature threshold is between -40°C and - 20°C.

3. Device according to claim 1 or 2, **characterized in that** second standby temperature threshold is above the first standby temperature, for example one to thirty degrees above the first standby temperature threshold.

4. Device according to any of claims 1 to 3, **characterized in that** the compressor is a variable speed compressor (8), the electronic controller (21) being configured for operating the compressor (8) at its lowest speed above zero during the first standby mode when producing cooling power for cooling the heat exchanger (7).

5. Device according to any of claims 1 to 4, **characterized in that** the electronic controller (21) is configured for operating the compressor (8) during a minimum preset operating time when started during the first standby mode for producing cooling power for cooling the heat exchanger (7).

6. Device according to any of claims 1 to 5, **characterized in that** it comprises a temperature sensor (19) for measuring or calculating the heat exchanger (7) temperature.

7. Device according to any of claims 1 to 6, **characterized in that** in the first standby mode the electronic controller (21) is configured for controlling the refrigeration system to maintain the refrigerant temperature at the heat exchanger (7) inlet at predefined temperature.

8. Device according to any of claims 1 to 7, **characterized in that** it comprises and expansion vessel (29) comprising an inlet connected to the refrigerant cooling loop circuit (20), downstream the compressor (8) outlet, and an outlet connected to the refrigerant cooling loop circuit (20), upstream the compressor (8) inlet, the device comprising a set of valve(s) (28, 30) configured for controlling the flow of refrigerant to the expansion vessel (29) and from the expansion vessel (29), for regulating the pressure in the refrigerant cooling loop circuit (20) and/or in the expansion vessel (29).

9. Device according to any of claims 1 to 8, **characterized in that** the electronic controller (21) is configured for switching the refrigeration system in a second refuelling mode upon receiving a signal indicative of a refuelling start or demand for a container.

10. Device according to claim 9, **characterized in that** in the second refuelling mode the electronic controller (21) is configured for controlling the refrigerant temperature difference between inlet (18) and outlet (17) of heat exchanger (7) and notably for increasing the opening of the expansion valve (10) when said temperature difference increases and for decreasing the opening of the expansion valve (10) when said temperature difference decreases.

11. Device according to any of claims 1 to 10, **characterized in that** the refrigerant cooling loop circuit (20) comprises a bypass conduit (13) comprising an upstream end connected to the outlet of the compressor (8) and a downstream end connected to the refrigerant cooling loop circuit (20) upstream the compressor (8) inlet and bypassing the condenser section (9) and expansion valve (10), the device comprising a bypass regulating valve (15) for controlling the flow of refrigerant flowing into the by-pass conduit (13).

12. Device according to claim 11, **characterized in that** it comprises a pressure sensor (16) for sensing the refrigerant pressure in the cooling loop circuit (20) between the compressor inlet and the heat exchanger (7) outlet, notably at the inlet of the compressor (8), the electronic controller (21) being configured in the first standby mode for starting cold source (12) and/or operating the compressor (8) when the measured pressure in the refrigerant cooling loop circuit (20) is above a preset standby pressure threshold and thus lowering the pressure in the refrigerant cooling loop circuit (20).

13. A process for refuelling containers with pressurized gas, notably for refuelling gaseous hydrogen tanks, with a device comprising gas source (2), a transfer circuit (4) for transferring compressed gas from the gas source (2) to a container (3), the process comprising a step of cooling a heat exchanger (7) located in the transfer circuit (4), the heat exchanger (7) being in heat exchange with the gas flowing from the source (2) to the container(s) (3), the step of cooling comprising the production of a cooling power in a evaporator section (11) of a refrigerant cooling loop circuit (20), the refrigerant cooling loop circuit (20) comprising, arranged in series, a compressor (8), a condenser section (9), an expansion valve (10) and the evaporator section (11), the condenser section (9) being in heat exchange with a cold source (12), the process comprising the step of switching the refrigeration system in a first standby mode when the device is not refuelling a container, **characterized in that**, in said first standby mode the compressor (8) is switched off when the temperature of the heat exchanger is equal or below a predefined first standby temperature threshold and is started and operated for producing cooling power and cooling the heat exchanger (7) when the temperature of the heat exchanger (7) is above a second standby threshold temperature and. **in that** the electronic controller (21) is configured in the first standby mode for starting or activating the cold source (12) when the sensed pressure in the refrigerant cooling loop circuit (20) is above a preset standby pressure threshold so that cold is transferred by the cold source (12) to the refrigerant cooling loop circuit (20) and thus the pressure in the refrigerant cooling loop circuit (20) is lowered.

14. Process according to claim 13 **characterized in that** it comprises a step of directing some refrigerant of the refrigerant cooling loop circuit (20) to an expansion vessel (29) for lowering the pressure in the refrigerant cooling loop circuit (20) below a predetermined value.

15. Process according to claim 14 **characterized in that**, when the pressure in the expansion vessel (29) is above a predetermined value, the process comprises a step providing cold to the refrigerant cooling loop circuit (20) via the cold source (12) and withdrawing gas from the expansion vessel (2) to the refrigerant cooling loop circuit (20).

16. Process according to any of claims 12 to 15**characterized in that** the cold source (12) and the compressor (8) are both started when the heat exchanger (7) must be cooled.

## Patentansprüche

1. Vorrichtung zum Betanken von Behältern mit Druckgas, insbesondere zum Betanken von Behältern mit gasförmigem Wasserstoff, umfassend eine Druckgasquelle (2), einen Übertragungskreislauf (4) mit einem stromaufwärts gelegenen Ende (5), das mit der Gasquelle (2) verbunden ist, und mindestens einem stromabwärts gelegenen Ende (6), das dazu bestimmt ist, abnehmbar mit einem Behälter (3) verbunden zu werden, wobei die Vorrichtung (1) ein Kühlsystem zum Kühlen des aus der Gasquelle (2) strömenden Gases vor seinem Eintreten in den Behälter (3) umfasst, das Kühlsystem einen Kältemittelkühlkreislauf (20) umfasst, der in Reihe angeordnet einen Kompressor (8), einen Kondensatorabschnitt (9), ein Expansionsventil (10) und einen Verdampferabschnitt (11) umfasst, wobei das Kühlsystem eine Kältequelle (12) im Wärmeaustausch mit dem Kondensatorabschnitt (9) und einem Wärmetauscher (7) umfasst, der sich in dem Übertragungskreislauf (4) befindet und einen Wärmeaustauschabschnitt zwischen dem im Übertragungskreislauf (4) strömenden Gas und dem Verdampferabschnitt (11) umfasst, die Vorrichtung eine elektronische Steuervorrichtung (21) zum Steuern des Kühlsystems umfasst, die Vorrichtung ferner einen Temperatursensor (19) zum Erfassen der Temperatur des Wärmetauschers (7) umfasst, die elektronische Steuervorrichtung (21) dazu ausgelegt ist, das Kühlsystem in eine erste Bereitschaftsbetriebsart zu schalten, wenn die Vorrichtung nicht einen Behälter auffüllt, **dadurch gekennzeichnet, dass** die elektronische Steuervorrichtung (21) in der ersten Bereitschaftsbetriebsart dazu ausgelegt ist, den Kompressor (8) auszuschalten, wenn die Temperatur des Wärmetauschers (7) gleich oder unter einem vordefinierten ersten Bereitschaftstemperaturschwellenwert liegt, und den Kompressor (8) zum Erzeugen von Kühlleistung und zum Kühlen des Wärmetauschers (7) zu starten und zu betreiben, wenn die erfasste Temperatur des Wärmetauschers (7) über einer zweiten Bereitschaftsschwellenwerttemperatur liegt, und dass die elektronische Steuervorrichtung (21) in der ersten Bereitschaftsbetriebsart zum Starten oder Aktivieren der Kältequelle (12) ausgelegt ist, wenn der erfasste Druck im Kältemittelkühlkreislauf (20) über einem voreingestellten Bereitschaftsdruckschwellenwert liegt, sodass Kälte durch die Kältequelle (12) an den Kältemittelkühlkreislauf (20) übertragen wird und somit der Druck im Kältemittelkühlkreislauf (20) gesenkt wird.

2. Vorrichtung gemäß Anspruch 1, **dadurch gekennzeichnet, dass** der erste Bereitschaftstemperaturschwellenwert zwischen -40 °C und -20 °C liegt.

3. Vorrichtung gemäß Anspruch 1 oder 2, **dadurch gekennzeichnet, dass** der zweite Bereitschaftstemperaturschwellenwert über der ersten Bereitschaftstemperatur, zum Beispiel ein bis dreißig Grad über dem ersten Bereitschaftstemperaturschwellenwert, liegt.

4. Vorrichtung gemäß einem der Ansprüche 1 bis 3, **dadurch gekennzeichnet, dass** der Kompressor ein Kompressor (8) mit variabler Drehzahl ist, wobei die elektronische Steuervorrichtung (21) dazu ausgelegt ist, den Kompressor (8) während der ersten Bereitschaftsbetriebsart mit seiner niedrigsten Drehzahl über null zu betreiben, wenn dieser Kühlenergie zum Kühlen des Wärmetauschers (7) erzeugt.

5. Vorrichtung gemäß einem der Ansprüche 1 bis 4, **dadurch gekennzeichnet, dass** die elektronische Steuervorrichtung (21) dazu ausgelegt ist, den Kompressor (8) während einer minimalen voreingestellten Betriebszeit zu betreiben, wenn dieser während der ersten Bereitschaftsbetriebsart zum Erzeugen von Kühlleistung zum Kühlen des Wärmetauschers (7) gestartet wird.

6. Vorrichtung gemäß einem der Ansprüche 1 bis 5, **dadurch gekennzeichnet, dass** diese einen Temperatursensor (19) zum Messen oder Berechnen der Temperatur des Wärmetauschers (7) umfasst.

7. Vorrichtung gemäß einem der Ansprüche 1 bis 6, **dadurch gekennzeichnet, dass** die elektronische Steuervorrichtung (21) in der ersten Bereitschaftsbetriebsart dazu ausgelegt ist, das Kühlsystem so zu steuern, dass die Kältemitteltemperatur am Einlass des Wärmetauschers (7) auf einer vordefinierten Temperatur gehalten wird.

8. Vorrichtung gemäß einem der Ansprüche 1 bis 7, **dadurch gekennzeichnet, dass** diese ein Ausdehnungsgefäß (29) umfasst, das einen mit dem Kältemittelkühlkreislauf (20) verbundenen Einlass stromabwärts des Auslasses des Kompressors (8) und einen mit dem Kühlkreislauf (20) verbundenen Auslass stromaufwärts des Einlasses des Kompressors (8) aufweist, wobei die Vorrichtung einen Satz von Ventilen (28, 30) umfasst, die dazu ausgelegt sind, den Kältemittelfluss an das Expansionsgefäß (29) und aus dem Expansionsgefäß (29) zu steuern, um den Druck im Kühlkreislauf (20) und/oder im Expansionsgefäß (29) zu regeln.

9. Vorrichtung gemäß einem der Ansprüche 1 bis 8, **dadurch gekennzeichnet, dass** die elektronische Steuervorrichtung (21) dazu ausgelegt ist, das Kühlsystem in eine zweite Betankungsbetriebsart zu schalten, wenn sie ein Signal empfängt, das einen Betankungsbeginn oder eine Anforderung für einen Behälter anzeigt.

10. Vorrichtung gemäß Anspruch 9, **dadurch gekennzeichnet, dass** die elektronische Steuervorrichtung (21) in der zweiten Betankungsbetriebsart dazu ausgelegt ist, die Temperaturdifferenz des Kältemittels zwischen dem Einlass (18) und dem Auslass (17) des Wärmetauschers (7) zu steuern und insbesondere die Öffnung des Expansionsventils (10) zu vergrößern, wenn die Temperaturdifferenz zunimmt, und die Öffnung des Expansionsventils (10) zu verkleinern, wenn die Temperaturdifferenz abnimmt.

11. Vorrichtung gemäß einem der Ansprüche 1 bis 10, **dadurch gekennzeichnet, dass** der Kältemittelkühlkreislauf (20) eine Umgehungsleitung (13) umfasst, die ein stromaufwärts gelegenes Ende, das mit dem Auslass des Kompressoreinlasses (8) verbunden ist, und ein stromabwärts gelegenes Ende umfasst, das mit dem Kältemittelkühlkreislauf (20) stromaufwärts des Kompressors (8) verbunden ist und den Kondensatorabschnitt (9) und das Expansionsventil (10) umgeht, wobei die Vorrichtung ein Umgehungsregelventil (15) zum Steuern des Kältemittelflusses umfasst, der in die Umgehungsleitung (13) fließt.

12. Vorrichtung gemäß Anspruch 11, **dadurch gekennzeichnet, dass** diese einen Drucksensor (16) zum Erfassen des Kältemitteldrucks im Kühlkreislauf (20) zwischen dem Kompressoreinlass und dem Auslass des Wärmetauschers (7), insbesondere am Einlass des Kompressors (8), umfasst, wobei die elektronische Steuervorrichtung (21) in der ersten Bereitschaftsbetriebsart zum Starten der Kältequelle (12) und/oder zum Betreiben des Kompressors (8) ausgelegt ist, wenn der gemessene Druck im Kühlkreislauf (20) über einem voreingestellten Bereitschaftsdruckschwellenwert liegt und somit den Druck im Kühlkreislauf (20) senkt.

13. Verfahren zum Betanken von Behältern mit Druckgas, insbesondere zum Betanken von Tanks mit gasförmigem Wasserstoff, mit einer Vorrichtung, die eine Gasquelle (2) und einen Übertragungskreislauf (4) zum Übertragen von Druckgas aus der Gasquelle (2) zu einem Behälter (3) umfasst, wobei das Verfahren einen Schritt des Kühlens eines Wärmetauschers (7) umfasst, der sich in dem Übertragungskreislauf (4) befindet, wobei der Wärmetauscher (7) im Wärmeaustausch mit dem aus der Quelle (2) zu dem/den Behälter(n) (3) strömenden Gas steht, wobei der Schritt des Kühlens die Erzeugung einer Kühlleistung in einem Verdampferabschnitt (11) eines Kältemittelkühlkreislaufs (20) umfasst, wobei der Kältemittelkühlkreislauf in Reihe angeordnet einen Kompressor (8), einen Kondensatorabschnitt (9), ein Expansionsventil (10) und den Verdampferabschnitt (11) umfasst, wobei der Kondensatorabschnitt (9) im Wärmeaustausch mit einer Kältequelle (12) steht, das Verfahren den Schritt des Umschaltens des Kühlsystems in eine erste Bereitschaftsbetriebsart umfasst, wenn die Vorrichtung nicht einen Behälter auffüllt, **dadurch gekennzeichnet, dass** in der ersten Bereitschaftsbetriebsart der Kompressor (8) ausgeschaltet wird, wenn die Temperatur des Wärmetauschers gleich oder unter einem vordefinierten ersten Bereitschaftstemperaturschwellenwert liegt, und zum Erzeugen von Kühlleistung und Kühlen des Wärmetauschers (7) gestartet und betrieben wird, wenn die Temperatur des Wärmetauschers (7) über einer zweiten Bereitschaftschwellenwerttemperatur liegt, und dass die elektronische Steuervorrichtung (21) in der ersten Bereitschaftsbetriebsart zum Starten und Aktivieren der Kältequelle (12) ausgelegt ist, wenn der erfasste Druck im Kältemittelkühlkreislauf (20) über einem voreingestellten Bereitschaftsdruckschwellenwert liegt, sodass Kälte durch die Kältequelle (12) zum Kältemittelkühlkreislauf (2) übertragen wird und somit der Druck im Kältemittelkühlkreislauf (20) gesenkt wird.

14. Verfahren gemäß Anspruch 13, **dadurch gekennzeichnet, dass** es einen Schritt umfasst, bei dem ein Teil des Kältemittels des Kältemittelkühlkreislaufs (20) an ein Expansionsgefäß (29) geleitet wird, um den Druck im Kältemittelkühlkreislauf (20) unter einen vorbestimmten Wert zu senken.

15. Verfahren gemäß Anspruch 14, **dadurch gekennzeichnet, dass**, wenn der Druck im Expansionsgefäß (29) über einem vorbestimmten Wert liegt, das Verfahren einen Schritt umfasst, bei dem dem Kältemittelkühlkreislauf (20) über die Kältequelle (12) Kälte zugeführt wird und Gas aus dem Expansionsgefäß (2) in den Kältemittelkühlkreislauf (20) abgezogen wird.

16. Verfahren gemäß einem der Ansprüche 12 bis 15, **dadurch gekennzeichnet, dass** die Kältequelle (12) und der Kompressor (8) beide gestartet werden, wenn der Wärmetauscher (7) gekühlt werden muss.

## Revendications

1. Dispositif pour ravitailler des récipients avec du gaz sous pression, notamment pour ravitailler des réservoirs d'hydrogène gazeux, comprenant une source de gaz sous pression (2), un circuit de transfert (4) comprenant une extrémité amont (5) raccordée à la source de gaz (2) et au moins une extrémité aval (6) destinée à être raccordée de façon amovible à un récipient (3), le dispositif (1) comprenant un système de réfrigération pour refroidir le gaz s'écoulant depuis la source de gaz (2) avant son entrée dans le récipient (3), le système de réfrigération comprenant un circuit en boucle de refroidissement par réfrigérant (20) comprenant, agencés en série, un compresseur (8), une section de condenseur (9), une vanne d'expansion (10) et une section d'évaporateur (11), le système de réfrigération comprenant une source de froid (12) en échange de chaleur avec la section de condenseur (9) et un échangeur de chaleur (7) situé dans le circuit de transfert (4) et comprenant une section d'échange de chaleur entre le gaz s'écoulant dans le circuit de transfert (4) et la section d'évaporateur (11), le dispositif comprenant un dispositif de commande électronique (21) pour commander le système de réfrigération, le dispositif incluant en outre un capteur de température (19) pour capter la température de l'échangeur de chaleur (7), le dispositif de commande électronique (21) étant configuré pour commuter le système de réfrigération dans un premier mode de veille lorsque le dispositif n'est pas en train de ravitailler un récipient, **caractérisé en ce que** dans le premier mode de veille, le dispositif de commande électronique (21) est configuré pour éteindre le compresseur (8) lorsque la température de l'échangeur de chaleur (7) est égale ou inférieure à un premier seuil de température de veille prédéfini et pour démarrer et faire fonctionner le compresseur (8) pour produire de la puissance de refroidissement et refroidir l'échangeur de chaleur (7) lorsque la température captée de l'échangeur de chaleur (7) est supérieure à une deuxième température de seuil de veille, et, **en ce que** le dispositif de commande électronique (21) est configuré dans le premier mode de veille pour démarrer ou activer la source de froid (12) lorsque la pression captée dans le circuit en boucle de refroidissement par réfrigérant (20) est supérieure à un seuil de pression de veille préréglé de sorte que le froid soit transféré par la source de froid (12) au circuit en boucle par refroidissement de réfrigérant (20) et ainsi la pression dans le circuit en boucle de refroidissement par réfrigérant (20) est abaissée.

2. Dispositif selon la revendication 1, **caractérisé en ce que** le premier seuil de température de veille est compris entre -40 °C et -20 °C.

3. Dispositif selon la revendication 1 ou 2, **caractérisé en ce que** le deuxième seuil de température de veille est supérieur à la première température de veille, par exemple supérieure de un à trente degrés au premier seuil de température de veille.

4. Dispositif selon l'une quelconque des revendications 1 à 3, **caractérisé en ce que** le compresseur est un compresseur à vitesse variable (8), le dispositif de commande électronique (21) étant configuré pour faire fonctionner le compresseur (8) à sa vitesse la plus basse supérieure à zéro pendant le premier mode de veille lors de la production de puissance de refroidissement pour refroidir l'échangeur de chaleur (7) .

5. Dispositif selon l'une quelconque des revendications 1 à 4, **caractérisé en ce que** le dispositif de commande électronique (21) est configuré pour faire fonctionner le compresseur (8) pendant une durée de fonctionnement minimale préréglée lorsqu'il est démarré pendant le premier mode de veille pour produire de la puissance de refroidissement pour refroidir l'échangeur de chaleur (7).

6. Dispositif selon l'une quelconque des revendications 1 à 5, **caractérisé en ce qu'**il comprend un capteur de température (19) pour mesurer ou calculer la température de l'échangeur de chaleur (7).

7. Dispositif selon l'une quelconque des revendications 1 à 6, **caractérisé en ce que** dans le premier mode de veille le dispositif de commande électronique (21) est configuré pour commander le système de réfrigération afin de maintenir la température du réfrigérant à l'entrée de l'échangeur de chaleur (7) à une température prédéfinie.

8. Dispositif selon l'une quelconque des revendications 1 à 7, **caractérisé en ce qu'**il comprend un vase d'expansion (29) comprenant une entrée raccordée au circuit en boucle de refroidissement par réfrigérant (20), en aval de la sortie du compresseur (8), et une sortie raccordée au circuit en boucle de refroidissement par réfrigérant (20), en amont de l'entrée du compresseur (8), le dispositif comprenant un ensemble de vanne(s) (28, 30) configurée(s) pour commander l'écoulement de réfrigérant vers le vase d'expansion (29) et depuis le vase d'expansion (29), pour réguler la pression dans le circuit en boucle de refroidissement par réfrigérant (20) et/ou dans le vase d'expansion (29).

9. Dispositif selon l'une quelconque des revendications 1 à 8, **caractérisé en ce que** le dispositif de commande électronique (21) est configuré pour commuter le système de réfrigération dans un deuxième mode de ravitaillement à réception d'un signal indicatif d'un démarrage de ravitaillement ou d'une demande de récipient.

10. Dispositif selon la revendication 9, **caractérisé en ce que** dans le deuxième mode de ravitaillement, le dispositif de commande électronique (21) est configuré pour commander la différence de température du réfrigérant entre l'entrée (18) et la sortie (17) de l'échangeur de chaleur (7) et notamment pour augmenter l'ouverture de la vanne d'expansion (10) lorsque ladite différence de température augmente et pour diminuer l'ouverture de la vanne d'expansion (10) lorsque ladite différence de température diminue.

11. Dispositif selon l'une quelconque des revendications 1 à 10, **caractérisé en ce que** le circuit en boucle de refroidissement par réfrigérant (20) comprend un conduit de contournement (13) comprenant une extrémité amont raccordée à la sortie du compresseur (8) et une extrémité aval raccordée au circuit en boucle de refroidissement par réfrigérant (20) en amont de l'entrée de compresseur (8) et contournant la section de condenseur (9) et la vanne d'expansion (10), le dispositif comprenant une vanne de régulation de contournement (15) pour commander l'écoulement de réfrigérant s'écoulant dans le conduit de contournement (13) .

12. Dispositif selon la revendication 11, **caractérisé en ce qu'**il comprend un capteur de pression (16) pour capter la pression du réfrigérant dans le circuit en boucle de refroidissement (20) entre l'entrée du compresseur et la sortie de l'échangeur de chaleur (7), notamment à l'entrée du compresseur (8), le dispositif de commande électronique (21) étant configuré dans le premier mode de veille pour démarrer la source de froid (12) et/ou faire fonctionner le compresseur (8) lorsque la pression mesurée dans le circuit en boucle de refroidissement par réfrigérant (20) est supérieure à un seuil de pression de veille préréglé et ainsi abaisser la pression dans le circuit en boucle de refroidissement par réfrigérant (20).

13. Procédé pour ravitailler des récipients en gaz sous pression, notamment pour ravitailler de réservoirs d'hydrogène gazeux, avec un dispositif comprenant une source de gaz (2), un circuit de transfert (4) pour transférer du gaz comprimé de la source de gaz (2) vers un récipient (3), le procédé comprenant une étape consistant à refroidir un échangeur de chaleur (7) situé dans le circuit de transfert (4), l'échangeur de chaleur (7) étant en échange de chaleur avec le gaz s'écoulant de la source (2) vers le(s) récipient(s) (3), l'étape de refroidissement comprenant la production d'une puissance de refroidissement dans une section d'évaporateur (11) d'un circuit en boucle de refroidissement par réfrigérant (20), le circuit en boucle de refroidissement par réfrigérant (20) comprenant, agencés en série, un compresseur (8), une section de condenseur (9), une vanne d'expansion (10) et la section d'évaporateur (11), la section de condenseur (9) étant en échange de chaleur avec une source de froid (12), le procédé comprenant l'étape consistant à commuter le système de réfrigération dans un premier mode de veille lorsque le dispositif n'est pas en train de ravitailler un récipient, **caractérisé en ce que**, dans ledit premier mode de veille, le compresseur (8) est arrêté lorsque la température de l'échangeur de chaleur est égale ou inférieure à un premier seuil de température de veille prédéfini et est démarré et fonctionne pour produire de la puissance de refroidissement et refroidir l'échangeur de chaleur (7) lorsque la température de l'échangeur de chaleur (7) est supérieure à un deuxième seuil de température de veille et **en ce que** le dispositif de commande électronique (21) est configuré dans le premier mode de veille pour démarrer ou activer la source de froid (12) lorsque la pression captée dans le circuit en boucle de refroidissement par réfrigérant (20) est supérieure à un seuil de pression d'attente préréglé de sorte que le froid soit transféré par la source de froid (12) au circuit en boucle de refroidissement par réfrigérant (20) et ainsi la pression dans le circuit en boucle de refroidissement par réfrigérant (20) est abaissée.

14. Procédé selon la revendication 13 **caractérisé en ce qu'**il comprend une étape consistant à diriger une partie du réfrigérant du circuit en boucle de refroidissement par réfrigérant (20) vers un vase d'expansion (29) pour abaisser la pression dans le circuit en boucle de refroidissement par réfrigérant (20) en dessous d'une valeur prédéterminée.

15. Procédé selon la revendication 14 **caractérisé en ce que**, lorsque la pression dans le vase d'expansion (29) est supérieure à une valeur prédéterminée, le procédé comprend une étape consistant à fournir du froid au circuit en boucle de refroidissement par réfrigérant (20) via la source de froid (12) et à retirer le gaz du vase d'expansion (2) vers le circuit en boucle de refroidissement par réfrigérant (20).

16. Procédé selon l'une quelconque des revendications 12 à 15 **caractérisé en ce que** la source de froid (12) et le compresseur (8) sont tous deux démarrés lorsque l'échangeur de chaleur (7) doit être refroidi
